# EUROPEAN PATENT APPLICATION

(11) **EP 2 816 378 A1**
(43) Date of publication of application: **24.12.2014**
(21) Application number: 13748678.3
(22) Date of filing: 08.02.2013
(51) Int. Cl.: G02B 1/10, B32B 7/02, G02C 7/00

(54) **OPTICAL MEMBER AND METHOD FOR MANUFACTURING OPTICAL MEMBER**

(30) Priority: 17.02.2012 JP 2012033279
(71) Applicant: HOYA LENS MANUFACTURING PHILIPPINES INC., Cavite (PH)
(72) Inventor: HOSHINO, Yuta, Shinjuku-ku, Tokyo 161-8525 (JP); OSHITA, Shugo, Shinjuku-ku, Tokyo 161-8525 (JP); KOSHI, Yukiko, Shinjuku-ku, Tokyo 161-8525 (JP)
(74) Representative: Beckmann, Claus
(86) International application number: PCT/JP2013/000718
(87) International publication number: WO 2013/121763

(57) **Abstract**

To provide an optical member in which a patterned shape is visible when viewed from a prescribed angle without impeding the field of vision of the wearer, and a method of manufacturing an optical member permitting the manufacturing of such an optical member.

The optical member of the present invention is characterized by comprising a lens substrate 2, a patterning layer 3 in which a prescribed shape has been patterned in a manner covering a portion of the lens substrate, and a hard coat layer 4 formed so as to cover the lens substrate and the patterning layer, and in that a refractive index of the lens substrate 2 is equal to a refractive index of the hard coat layer 4, and differs from a refractive index of the patterning layer 3 by equal to or more than 0.02.

## Description

### Technical field

The present invention relates to an optical member and a method of manufacturing an optical member.

### Background Art

For example, high refractive index materials have been actively researched and developed in recent years to achieve thinning of the plastic lenses employed in eyeglasses and the like.

Compared to conventional glass lenses, plastic lenses are lighter and easier to process. They also afford the advantage of relatively good strength relative to impact. On the other hand, they present the disadvantages of poorer scratch resistance and weatherability than glass lenses due to lower hardness.

Thus, particularly when applying plastic lenses to eyeglass lenses, a cured film, known as a hard coat layer, is generally formed on plastic lenses (lens substrates).

As set forth above, plastic lenses generally have a lens substrate and a hard coat layer. When applying a plastic lens as a sunglass lens, methods of dyeing the lens substrate or hard coat layer or methods of forming a mirror coating layer on the hard coat layer have been proposed to reduce transmittance of light passing through the plastic lens, reflect light, or the like.

In particular, it is easy to use methods of forming mirror coating layers to render a mirror coating layer as a multilayer film comprised of transparent dielectric materials to adjust the reflectance, transmittance, and the like of individual wavelengths. Thus, it has become possible to provide sunglass lenses that reflect a variety of colors and are highly fashionable (for example, see Patent document 1).

However, dyeing methods and methods of forming mirror coating layers such as those set forth above reduce the transmittance of light passing through the plastic lenses when wearing the eyeglasses (sunglasses). Thus, they impede the field of vision of the wearer. Further, somebody else can recognize from any angle that the plastic lenses have been dyed and that a mirror coating layer has been formed.

Thus, no technique has currently been developed that makes it possible to render the shape of the patterning that has been formed on a plastic lens visible when viewed from a prescribed angle without impeding the field of vision of the wearer.

### Prior art documents

### Patent document

Patent document1: Japanese Unexamined Patent Publication (KOKAI) No. 2000-66149.

### Summary of the invention

### Problems to be solved by the invention

The object of the present invention is to provide an optical member in which a patterned shape is visible when viewed from a prescribed angle without impeding the field of vision of the wearer, and a method of manufacturing an optical member permitting the manufacturing of such an optical member.

### Means for solving the problems

Such object is achieved by the following invention.

The optical member of the present invention is characterized by comprising:
a lens substrate;
a patterning layer in which a prescribed shape has been patterned in a manner covering a portion of the lens substrate; and
a hard coat layer formed so as to cover the lens substrate and the patterning layer; and
in that a refractive index of the lens substrate is equal to a refractive index of the hard coat layer, and differs from a refractive index of the patterning layer by equal to or more than 0.02.

Generally, when the refractive indexes of two layers differ by equal to or more than 0.02, buffer fringes are observed. Since the refractive index of the lens substrate differs by equal to or more than 0.02 from the refractive index of the patterning layer, buffer fringes are observed between the patterning layer and the lens substrate. Additionally, since the refractive index of the lens substrate is equal to the refractive index of the hard coat layer, the generation of a buffer fringe due to the difference in refractive index between the hard coat layer and the lens substrate can be prevented or inhibited. The buffer fringe tends not to be observed when the optical member is viewed directly, and tends to be observed when it is viewed obliquely. Thus, it is possible to achieve an optical member equipped with a patterning layer that permits the selective viewing of a formed pattern when viewed obliquely by somebody else without impeding the field of vision of the wearer.

With the optical member of the present invention, it is desirable for the patterning layer to be invisible when directly viewing the optical member along the optical axis of the optical member, but for the patterning layer to be visible when viewing the optical member obliquely relative to the direction of the optical axis.

Thus, it is possible to obtain an optical member equipped with a patterning layer such that a patterned shape can be selectively viewed when viewed by somebody else obliquely without impeding the field of vision of the wearer.

With the optical member of the present invention, the patterning layer desirably has a diffuse transmittance of equal to or less than 1.0.

Thus, since the patterning layer can be formed to have transmittance, it is possible to reliably prevent impeding the field of vision of the eyeglass wearer when wearing the glasses.

With the optical member of the present invention, the patterning layer desirably has a refractive index of equal to or more than 1.2 but equal to or less than 2.8.

Thus, the refractive index of the patterning layer can readily be set to differ by equal to or more than 0.02 with the refractive index of the lens substrate.

With the optical member of the present invention, the patterning layer desirably comprises a first layer formed in a first region and a second layer formed in a second region of a planar view as viewed along the optical axis of the optical member.

With the optical member of the present invention, the thickness of the first layer desirably differs from the thickness of the second layer.

Thus, the color of the first layer that is viewed can differ from the color of the second layer.

With the optical member of the present invention, the refractive index of the first layer desirably differs from the refractive index of the second layer.

Thus, the color of the first layer that is viewed can differ from the color of the second layer.

The method of manufacturing an optical member of the present invention is characterized by comprising:
forming a patterning layer, covering a portion of a lens substrate and having a refractive index differing from the refractive index of the lens substrate by equal to or more than 0.02, in a prescribed shape; and
forming a hard coat layer with a refractive index that is equal to the refractive index of the lens substrate so as to cover the lens substrate and patterning layer.

This permits the manufacturing of an optical member equipped with a patterning layer such that the patterning layer can be selectively viewed by somebody else when viewed obliquely without impeding the field of vision of the wearer.

### Brief descriptions of the drawings

[Fig. 1] Drawings of a first implementation mode in which the optical member of the present invention is applied to an eyeglass lens.
[Fig. 2] A partial sectional view of a second implementation mode in which the optical member of the present invention is applied to an eyeglass lens.
[Fig. 3] A partial sectional view of a third implementation mode in which the optical member of the present invention is applied to an eyeglass lens.
[Fig. 4] A partial sectional view of a fourth implementation mode in which the optical member of the present invention is applied to an eyeglass lens.
[Fig. 5] Photographs of an eyeglass lens in Examples.

### Mode for carrying out the invention

The optical member and the method of manufacturing an optical member of the present invention will be described in detail based on suitable implementation modes shown in the attached drawings.

An example in which the optical member of the present invention is applied to an eyeglass lens mounted in eyeglasses will be described below.

The terminology employed in the description of the implementation modes is defined as follows.

The term "object side surface" of an eyeglass lens means the surface on the side of the object that is viewed when a wearer is wearing the eyeglass lens. The "object side surface" is also referred to as the "outside surface," "upper (side) surface," and "convex surface." Similarly, the "visual object side" is also referred to as the "outside," "upper side," and "convex surface side."

The term "eyeball side surface" of an eyeglass lens means the surface on the eyeball side of the wearer when the wearer is wearing the eyeglass lens. The "eyeball side surface" is also referred to as the "inside surface," "lower (side) surface," or "concave surface." Similarly, the "eyeball side" is also referred to as the "inside," "lower side," and "concave surface side."

The term "parallel," in addition to cases where two straight lines or planes are completely parallel, includes cases in which the angle formed between two straight lines or planes falls within an acceptable error range relative to 0 degree and can thus be deemed to be essentially parallel.

The term "perpendicular," in addition to cases where two straight lines or planes are completely perpendicular, includes cases in which the angle formed between two straight lines or planes falls within an acceptable error range relative to 90 degrees and can thus be deemed to be essentially perpendicular.

Unless otherwise specified, "planar view" means the planar view when an object is viewed along the optical axis of an eyeglass lens.

Unless otherwise specified, "sectional view" means the sectional view when an object is sectioned along a sectional plane parallel to the optical axis of an eyeglass lens.

"Direct viewing" of an eyeglass lens means viewing an eyeglass lens along the optical axis thereof.

"Oblique viewing" of an eyeglass lens means viewing an eyeglass lens in a manner that is neither parallel nor perpendicular to the optical axis thereof.

The term "equal refractive indexes," in addition to cases where two refractive indexes being compared are precisely equal, includes cases where the difference between two refractive indexes falls within an acceptable error range, rendering them essentially equal.

"Covers" means that a layer at some distance from the lens substrate of an eyeglass lens is deposited on a layer near to the lens substrate or on the lens substrate such that a region of the lens substrate on which the layer near to the lens substrate or a layer apart from the lens substrate has been deposited cannot be directly seen in a planar view.

"Completely covered" means, in addition to cases where a layer at some distance from the lens substrate of an eyeglass lens completely covers a layer close to the lens substrate or the lens substrate, also includes cases where a layer close to the lens substrate or an extremely small portion of the lens substrate is not covered, but a layer that is apart from the lens substrate can be deemed to essentially completely cover a layer close to the lens substrate or the lens substrate.

"Thickness" means the length in the direction parallel to the optical axis of an eyeglass lens when an object is viewed in a sectional view.

### <First implementation mode>

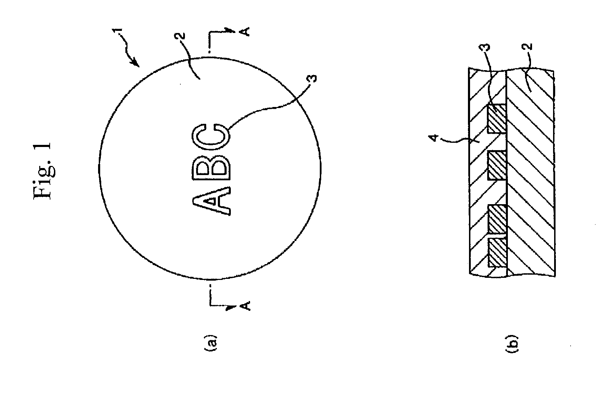

Fig. 1 shows drawings of a first implementation mode in which the optical member of the present invention is applied to an eyeglass lens ((a) planar view, (b) partial sectional view along section line A-A in Fig. 1(a)). The upper side in Fig. 1(b) will be considered the object side of the eyeglass lens and the lower side will be considered the eyeball side of the eyeglass lens below. In Fig. 1, to simplify the description, the size, thickness and the like of members constituting the eyeglass lens have been exaggerated in a schematic illustration, and vary greatly from the actual size, thickness and the like of the various members.

As shown in Fig. 1, eyeglass lens 1 is a plastic lens applied to eyeglasses and comprises a lens substrate 2, a patterning layer 3 patterned (formed) in a prescribed shape on lens substrate 2, and a hard coat layer 4 formed so as to cover lens substrate 2 and patterning layer 3.

Lens substrate 2 is comprised of plastic and serves as the substrate of eyeglass lens 1.

Examples of the material (plastic material) constituting lens substrate 2 are: methyl methacrylate homopolymer; copolymers of methyl methacrylate and one or more other monomer components; diethylene glycol bisallyl carbonate homopolymer; copolymers of diethylene glycol bisallyl carbonate and one or more other monomer components; sulfur-containing copolymers; halogen-containing copolymers; polycarbonate; polystyrene; polyvinyl chloride; unsaturated polyester; polyethylene terephthalate; polyurethane; polythiourethane; homopolymers of monomer having sulfide bonds; copolymers of a sulfide and one or more other monomer components; copolymers of polysulfides and one or more other monomer components; and copolymers of polydisulfides and one or more other monomer components.

By using such materials constituting lens substrate 2 singly or combining them for use, it is possible to obtain a high refractive index material with a refractive index (Ne) of equal to or higher than 1.5 but equal to or lower than 1.8. The optical member of the present invention can be suitably applied to an eyeglass lens 1 equipped with a lens substrate 2 having a refractive index falling within the above range.

Lens substrate 2 normally has a shape of exact circle in a planar view. The upper surface thereof is constituted by a curved convex surface, and the lower surface by a curved concave surface. The upper and lower surfaces constitute transmitting surfaces through which light passes. Humans (eyeglass wearers) can recognize objects positioned on the upper surface side from the lower surface side. Lens substrate 2 does not have to have a shape of exact circle.

Patterning layer 3 is patterned into a prescribed shape so as to cover a portion of lens substrate 2. In the present implementation mode, as shown in Fig. 1(a), it is patterned into the shape of the letters "ABC" in a planar view.

The refractive index of patterning layer 3 is set to differ from the refractive index of lens substrate 2 by equal to or more than 0.02.

Setting the relation between the refractive indexes (Ne) of lens substrate 2 and patterning layer 3 in the manner set forth above makes it possible to view patterning layer 3 when viewing eyeglass lens 1 obliquely and not to view it when eyeglass lens 1 is viewed directly. That is, patterning layer 3 is visible when wearing the eyeglasses without impeding the visual field of a human (eyeglass wearer) and as a selectively patterned shape (the letters "ABC" in the present implementation mode) when somebody else views eyeglass lens 1 obliquely.

Accordingly, by suitably selecting the shape of patterning layer 3, design properties of selective visibility of a desired shape when viewed obliquely by somebody else are imparted to eyeglass lens 1 without impeding the field of vision of the wearer.

Further, patterning layer 3 is desirably transparent (a transparent material layer). That makes it possible to reliably prevent impeding the field of vision of the eyeglass wearer when wearing the eyeglasses.

The degree of transparency of patterning layer 3 can be specified, for example, by the diffuse transmittance, visual transmittance, haze, and the like. Of these, specification by the diffuse transmittance is desirable.

The diffuse transmittance (Td) refers to the ratio of diffuse transmitted light (light that passes through while diffusing at the object surface and in the interior) to incident light (= transmitted light + reflected light + absorbed light). The smaller this value, the better the transparency can be said to be, and relatively, the more readily the degree of transparency can be specified.

Specifically, diffuse transmittance (Td) is desirably equal to or less than 1.0, preferably equal to or less than 0.8, and more preferably, equal to or less than 0.25. When diffuse transmittance (Td) is within the above range, patterning layer 3 can be said to have good transparency.

Patterning layer 3 is desirably not colored. That is, it desirably does not contain dyes or the like. Thus, since patterning layer 3 tends not to become visible when eyeglass lens 1 is viewed directly, an eyeglass lens 1 can be provided in which the field of vision of the eyeglass wearer is impeded that much less. When lens substrate 2 or hard coat layer 4 is colored, or when a colored layer 5, described further below, is formed, it is possible for the coloration to be such that patterning layer 3 tends not to be rendered visible by the color of the colored layer or the color of the substrate.

Further, the refractive index (Ne) of patterning layer 3 is desirably equal to or more than 1.2 but equal to or less than 2.8. Thus, the refractive index of patterning layer 3 can be readily set to differ by equal to or more than 0.02 from the refractive index of lens substrate 2.

Patterning layer 3 thus configured is desirably constituted so as to contain a particulate material made of a metal oxide material and a binder that binds the particles together. This allows patterning layer 3 to be transparent and for its refractive index (Ne) to fall within the range set forth above.

Examples of metal oxide materials constituting the particulate material are SiO₂, hollow SiO₂, TiO₂, ZrO₂. Al₂O₃, CeO₂, and SnO₂.

Specifically, when employing hollow SiO₂ as the metal oxide material, it is possible to set the refractive index (Ne) to equal to or more than 1.2 but equal to or less than 1.5. When SiO₂ is employed as the metal oxide material, it is possible to set the refractive index (Ne) to equal to or more than 1.50 but equal to or less than 1.55. When employing at least one from among ZrO₂ and Al₂O₃ as the metal oxide material, it is possible to set the refractive index (Ne) to equal to or more than 1.55 but equal to or less than 1.60. And when employing TiO₂ as the metal oxide material, it is possible to set the refractive index (Ne) to equal to or more than 1.60.

The binder is not specifically limited. For example, a binder containing a resin material is desirably employed. Examples of resin materials are urethane resins, epoxy resins, acrylic resins, polyester, polystyrene, and polyethylene.

It suffices for the refractive index of patterning layer 3 to differ by equal to or more than 0.02 from the refractive index of lens substrate 2. A difference of equal to or more than 0.1 is desirable, and a difference of equal to or more than 0.2 but equal to or less than 1.3 is preferred. Since this facilitates the generation of buffer fringes due to the refractive index differential, it becomes possible to render the shape of patterning layer 3 more clearly visible when obliquely viewing eyeglass lens 1.

The average thickness of patterning layer 3 is not specifically limited. It is desirably set to 100 to 1,500 nm, preferably to 100 to 800 nm. In this manner, patterning layer 3 reliably achieves the effect attained by providing patterning layer 3.

Since the configuration is one in which patterning layer 3 is covered by hard coat layer 4, hard coat layer 4 functions as a protective layer not just for lens substrate 2, but also for patterning layer 3. Thus, in the process of using eyeglass lens 1, the scratching of patterning layer 3 is reliably prevented or inhibited. As a result, when somebody else looks obliquely at eyeglass lens 1, the patterned shape that is visible (the letters "ABC" in the present implementation mode) is maintained for an extended period. Further, since there is no issue regarding the strength of patterning layer 3, the scope of selection of materials constituting patterning layer 3 broadens.

Further, employing a configuration in which patterning layer 3 is provided on the upper surface of lens substrate 2, that is, on the surface on the object side as is the case in the present implementation mode, can reduce reflection toward the direction of the surface on the eyeball side of eyeglass lens 1 in patterning layer 3. This can more reliably prevent impeding the field of vision by patterning layer 3 by the scattering of light entering diagonally from the rear and light reflecting off the face when wearing the eyeglasses than when patterning layer 3 is provided on the surface on the eyeball side.

Hard coat layer 4 is provided so as to cover lens substrate 2 and patterning layer 3, and functions to enhance the scratch resistance and weatherability of lens substrate 2.

Hard coat layer 4 is usually formed using a composition (hard coat material) containing an organic silicon compound (silane coupling agent) and a metal oxide.

The organic silicon compound is not specifically limited. For example, an organic silicon compound denoted by general formula (1): (R¹)ₙSi(X¹)₄₋ₙ (wherein, in general formula (1), R¹ denotes an organic group containing a polymerizable functional group and having two or more carbon atoms, X¹ denotes a hydrolyzable group, and n denotes an integer of 1 or 2) can be employed. Since the organic silicon compounds are crosslinked (connected) by functional group R¹, hard coat layer 4 can provide good scratch resistance and weatherability.

The details of the organic silicon compound denoted by general formula (1) above will be described for the method of manufacturing an eyeglass lens, set forth further below.

The metal oxide that is contained in hard coat layer 4 is not specifically limited. Examples are oxides of Al, Ti, Sb, Zr, Si, Ce, Fe, In, and Sn. One, or a combination of two or more, of these oxides can be used. Of these, TiO₂, ZrO₂, CeO₂, ZnO₂, SnO₂, and ITO (indium-tin compound oxide) are preferred. Adopting a configuration in which these metal oxides are contained in hard coat layer 4 makes it possible to set the refractive index of hard coat layer 4 relatively high, so that when a lens substrate 2 with a high refractive index is employed, it is still possible to achieve an eyeglass lens in which interference fringes are inhibited.

Such materials constituting hard coat layer 4 (organic silicon compounds and metal oxides) can be used singly or combined for use. In the present invention, the refractive index of hard coat layer 4 is set equal to the refractive index of lens substrate 2. Since it becomes possible to prevent or inhibit the generation of buffer fringes caused by the refractive index differential between hard coat layer 4 and lens substrate 2, it is possible for patterning layer 3 to be invisible when directly viewing eyeglass lens 1 and for it to be visible when obliquely viewing eyeglass lens 1.

The average thickness of hard coat layer 4 is not specifically limited. It is desirably set to 1,000 to 4,000 nm, preferably 2,000 to 3,000 nm. This imparts good strength to hard coat layer 4.

An antireflective layer, not shown, can be formed on hard coat layer 4.

By way of example, the antireflective layer can be comprised of inorganic materials such as SiO₂, SiO, ZrO₂, TiO₂, TiO, Ti₂O₃, Ti₂O₅, Al₂O₃, TaO₂, Ta₂O₅, NbO, Nb₂O₃, NbO₂, Nb₂O₃, CeO₂, MgO, Y₂O₃, SnO₂, MgF₂, and WO₃.

Such an antireflective layer can be formed, for example, by vacuum vapor deposition, ion plating, or sputtering.

The average thickness of the antireflective layer is not specifically limited. It is desirably 50 to 150 nm, preferably 70 to 120 nm.

A water-repellent antifouling layer, not shown, can be formed over the antireflective layer.

By way of example, such an antifouling layer can be obtained by forming a single-molecule film constituted by a fluorine-containing organic silicon compound on an antireflective layer.

Examples of the fluorine-containing organic silicon compound are compounds denoted by general formula (2): R²SiX¹₃ (wherein, in general formula (2), R² denotes a fluorine-containing organic group with one or more carbon atoms and X¹ denotes a hydrolyzable group).

For example, the antifouling layer can be obtained by preparing an antifouling layer-forming material by dissolving a fluorine-containing organic silicon compound in a solvent, coating the antifouling layer-forming material on an antireflective layer by a coating method, and then drying it. Examples of the antifouling layer coating method are the ink-jet method, dipping method, and spin-coating method.

The average thickness of the antifouling layer is not specifically limited. It is desirably 0.001 to 0.5 µm, preferably 0.001 to 0.03 µm.

Such eyeglass lens 1 can be manufactured, for example, in the following manner.
[A] A lens substrate 2 is first provided, and patterning layer 3 is formed in a manner covering a portion of lens substrate 2 (patterning layer-forming step).

Patterning layer 3 can be formed by, for example, preparing a patterning layer-forming material by dispersing the above-described particulate material and a binder in a dispersing medium, selectively coating (feeding) the patterning layer-forming material onto the upper surface of lens substrate 2 in a manner corresponding to the shape of the patterning layer 3 to be formed, and then drying the coating.

The dispersing medium is not specifically limited. Examples are ethylene glycol monomethyl ether acetate, ethylene glycol monoethyl ether acetate, ethylene glycol monopropyl ether acetate, ethylene glycol monobutyl ether acetate, propylene glycol monomethyl ether acetate, propylene glycol monoethyl ether acetate, propylene glycol monopropyl ether acetate, propylene glycol monobutyl ether acetate, ethylene glycol dimethyl ether, ethylene glycol diethyl ether, ethylene glycol dipropyl ether, ethylene glycol dibutyl ether, diethylene glycol dimethyl ether, diethylene glycol diethyl ether, diethylene glycol dipropyl ether, diethylene glycol dibutyl ether, propylene glycol dimethyl ether, propylene glycol diethyl ether, and other glycols. These can be employed singly or as mixed solvents.

The coating method used to form patterning layer 3 can be, by way of example, the ink-jet method, the nanoimprint method, or the nano ink method. At least one of these is desirably employed. These methods are desirable because they are methods permitting the ready formation of a patterning layer 3 of high film-forming precision, particularly among liquid coating methods.

Incorporating a particulate material and binder into the patterning layer-forming material as set forth above presents difficulty in rendering the patterning layer-forming material as a photosetting material. Thus, it is impractical to form patterning layer 3 by a photolithographic method. Accordingly, from this perspective, as well, the above methods are desirably employed as the methods of forming patterning layer 3.

The above methods will each be described in detail below.

### I: Ink-jet method

In the ink-jet method, the patterning layer-forming material (referred to as "ink", hereinafter) is sprayed onto the upper surface of lens substrate 2 in the form of droplets through the nozzle of a droplet-spraying head. Thus, the ink sketches out the shape of the patterning layer 3 to be formed. As needed, post-processing such as a heat treatment can be conducted to form patterning layer 3 on the upper surface of lens substrate 2.

In this context, the viscosity of the ink (ordinary temperature) is not specifically limited. Normally, about 3 to 10 cps (centipoises) is desirable, and about 4 to 8 cps is preferred. Keeping the ink viscosity within the above range makes it possible to stably spray droplets from the nozzle.

Nor is the (average) quantity of a single droplet of ink specifically limited. Normally, it is desirably about 0.1 to 40 pL (picoliters), preferably about 1 to 30 pL. Keeping the (average) quantity of a single droplet within the above range makes it possible to form a patterning layer 3 of more precise shape.

### II: Nanoimprint method

The nanoimprint method is conducted by, once ink has been adhered to a patterned mold corresponding to the shape of patterning layer 3, bringing the mold into contact with the upper surface of lens substrate 2. In this manner, the ink adhered to the mold transfers the shape to the upper surface of patterning layer 3. As needed, post-processing such as a heat treatment can be conducted to form patterning layer 3 on the upper surface of lens substrate 2.

By way of example, the mold can be formed (patterned) by electron-beam lithography, focused ion beam lithography, or the like, which are capable of forming minute structures of equal to or less than 100 nm. As a result, the shape of the ink that is transferred can also be minute.

The viscosity of the ink (ordinary temperature) is not specifically limited. Normally, it is desirably about 0.1 to 100 cps, preferably about 0.3 to 10 cps. Keeping the viscosity of the ink within such a range makes it possible to stably transfer the ink onto the upper surface of the lens substrate 2 from the head.

### III: Nano ink method

The nano ink method is conducted using, as a nib, the probe (stylet) of a scanning probe microscope (SPM) such as a scanning tunneling microscope (STM) or an atomic force microscope (AFM). With the probe in contact with lens substrate 2, the probe is displaced over the upper surface of lens substrate 2 while feeding ink to the probe. Thus, the ink is sketched in the shape of patterning layer 3. As needed, post-processing such as a heat treatment can be conducted to form patterning layer 3 on the upper surface of lens substrate 2.

Since the probe has a fine shape (for example, a diameter of several nm), the shape of the ink that is sketched can be made quite fine.

The viscosity of the ink (ordinary temperature) is not specifically limited. Normally, it is desirably about 0.1 to 100 cps, preferably about 0.3 to 10 cps. Keeping the viscosity of the ink within such a range makes it possible to stably displace the ink from the probe to the upper surface of lens substrate 2.

[B] Next, hard coat layer 4 is formed so as to cover lens substrate 2 and patterning layer 3 (hard coat layer forming step).

Hard coat layer 4 can be formed in the manner set forth below, for example, using a hard coat layer-forming material (sol) obtained by dissolving the organic silicon compound denoted by general formula (1): (R¹)ₙSi(X¹)₄₋ₙ (wherein, in general formula (1), R¹ denotes a polymerizable functional group-comprising organic group with two or more carbon atoms, X¹ denotes a hydrolyzable group, and n denotes an integer of 1 or 2), for example, in a solvent.

That is, it can be conducted by the sol-gel method: after preparing the hard coat layer-forming material (sol), the hard coat layer-forming material is coated (fed) so as to cover lens substrate 2 and patterning layer 3. Subsequently, heating is conducted to hydrolyze and polymerize hydrolyzable group X¹ contained in the organic silicon compound denoted by general formula (1), thus forming a siloxane oligomer and producing a gel.

An example of the organic silicon compound denoted by general formula (1) is one having an amino group as a polymerizable functional group. Specific examples are the compounds denoted by general formula (1A) below:

(R²)ₙSi(X¹)₄₋ₙ (1A)

(In general formula (1A), R² denotes a monovalent hydrocarbon group having an amino group and having two or more carbon atoms, X¹ denotes a hydrolyzable group, and n denotes an integer of 1 or 2.)

In general formula (1A), R² denotes a monovalent hydrocarbon group having an amino group and having two or more carbon atoms. Examples are a γ-aminopropyl group, N-β-(aminoethyle)-γ-aminopropyl group, and N-phenyl-γ-aminopropyl group.

In general formula (1A), n denotes an integer of 1 or 2. When there are multiple instances of R² (n=2), the multiple instances of R² can be identical or different, and the multiple instances of X¹ can be identical or different.

Specific examples of organic silicon compounds denoted by general formula (1A) are amino-based silane coupling agents such as: γ-aminopropyltrimethoxysilane, γ-aminopropyldimethoxydimethylsilane, γ-aminopropyltriethoxysilane, γ-aminopropyldiethoxymethylsilane, N-β-(aminoethyl)-γ-aminopropyldimethoxymethylsilane, N-β-(aminoethyl)-γ-aminopropyltrimethoxysilane, N-β-(aminoethyl)-γ-aminopropyltriethoxysilane, N-β-(aminoethyl)-γ-aminopropyldiethoxymethylsilane, N-phenyl-γ-aminopropyltrimethoxysilane, N-phenyl-γ-aminopropyldimethoxymethylsilane, N-phenyl-γ-aminopropyltriethoxysilane, and N-phenyl-γ-aminopropyldiethoxymethylsilane.

Examples of organic silicon compounds denoted by general formula (1) above are those having isocyanate groups in the form of polymerizable functional groups. Specific examples are the compounds denoted by general formula (1B) below:

(R³)ₙSi(X¹)₄₋ₙ (1B)

(In general formula (1B), R³ denotes a monovalent hydrocarbon group having an isocyanate group and having two or more carbon atoms, X¹ denotes a hydrolyzable group, and n denotes an integer of 1 or 2.)

In general formula (1B), R³ denotes a monovalent hydrocarbon group having an isocyanate group and having two or more carbon atoms, such as an isocyanate methyl group, α-isocyanate ethyl group, β-isocyanate ethyl group, α-isocyanate propyl group, β-isocyanate propyl group, or γ-isocyanate propyl group.

In general formula (1B), n denotes an integer of 1 or 2. When there are multiple instances of R³ (n=2), the multiple instances of R³ can be identical or different and the multiple instances of X¹ can be identical or different.

Specific examples of compounds denoted by general formula (1B) are isocyanate-based silane coupling agents such as: γ-isocyanatopropyltrimethoxysilane, γ-isocyanatopropyldimethoxymethylsilane, γ-isocyanatopropyltriethoxysilane, and γ-isocyanatopropyldiethoxymethylsilane.

Further examples of the organic silicon compound denoted by general formula (1) above are those having a polymerizable functional group in the form of an epoxy group. Specific examples are the compounds denoted by general formula (1C) below:

(R⁴)ₙSi(X¹)₄₋ₙ (1C)

(In general formula (1C), R⁴ denotes a monovalent hydrocarbon group having an epoxy group and having two or more carbon atoms, X¹ denotes a hydrolyzable group, and n denotes an integer of 1 or 2.)

In general formula (1C), R⁴ denotes a monovalent hydrocarbon group having an epoxy group and having two or more carbon atoms.

In general formula (1C), n denotes an integer of 1 or 2. When there are multiple instances of R⁴ (n=2), the multiple instances of R⁴ may be identical or different, and the multiple instances of X¹ may be identical or different.

Specific examples of compounds denoted by general formula (1C) are glycidoxymethyltrimethoxysilane, glycidoxymethyltriethoxysilane, α-glycidoxyethyltrimethoxysilane, α-glycidoxyethyltriethoxysilane, β-glycidoxyethyltriethoxysilane, β-glycidoxypropyltrimethoxysilane, α-glycidoxypropyltrimethoxysilane, α-glycidoxypropyltriethoxysilane, β-glycidoxypropyltriethoxysilane, γ-glycidoxypropyltrimethoxysilane, (3,4-epoxycyclohexyl)methyltrimethoxysilane, γ-glycidoxypropylvinyldiethoxysilane, γ-glycidoxypropylphenyldiethoxysilane, and δ-(3,4-epoxycyclohexyl)butyltriethoxysilane.

Examples of solvents used in the hard coat layer-forming material are: methanol, ethanol, isopropanol, propylene glycol monomethyl ether, propylene glycol monoethyl ether, propylene glycol monobutyl ether, propylene glycol propyl ether, ethylene glycol monomethyl ether, ethylene glycol monoethyl ether, ethylene glycol monobutyl ether, ethylene glycol, diethylene glycol, triethylene glycol, propylene glycol, diacetone alcohol, tetrahydrofuran, methyl ethyl ketone, methyl isobutyl ketone, toluene, ethyl acetate, propylene glycol monomethyl ether acetate, and propylene glycol monoethyl ether acetate. These can be used singly or as mixed solvents.

The hard coat layer-forming material can contain a curing catalyst to promote hydrolysis · polycondensation reaction, as well as various solvents, surfactants, and the like to enhance wettability during application on the lens substrate and smoothness. To the extent that they do not affect the physical properties of the hard coat layer, ultraviolet radiation-absorbing agents, oxidation-inhibiting agents, photostabilizers, and the like can be added to the hard coat layer-forming material.

Examples of curing catalysts are inorganic acids such as hydrochloric acid, sulfuric acid, and nitric acid; and organic acids such as oxalic acid, acetic acid, trifluoroacetic acid, methanesulfonic acid, trifluoromethanesulfonic acid, and lactic acid.

Examples of solvents that will dissolve organic silicon compounds are water, organic solvents, and mixed solvents thereof. Specific examples are: water such as pure water, ultrapure water, and ion-exchange water; alcohols such as methanol, ethanol, isopropanol, n-butanol, and methylisocarbinol; ketones such as acetone, 2-butanone, ethyl amyl ketone, diacetone alcohol, isophorone, and cyclohexanone; amides such as N,N-dimethylformamide and N,N-dimethylacetamide; ethers such as diethyl ether, ispropyl ether, tetrahydrofuran, 1,4-dioxane, and 3,4-dihydro-2H-pyran; glycol ethers such as 2-methoxyethanol, 2-ethoxyethanol, 2-butoxyethanol, ethylene glycol dimethyl ether; glycol ether acetates such as 2-methoxyethyl acetate, 2-ethoxyethyl acetate, and 2-butoxyethyl acetate; esters such as methyl acetate, ethyl acetate, isbutyl acetate, amyl acetate, ethyl lactate, and ethylene carbonate; aromatic hydrocarbons such as benzene, toluene, and xylene; aliphatic hydrocarbons such as hexane, heptane, iso-octane, and cyclohexane; halogenated hydrocarbons such as methylene chloride, 1,2-dichloroethane, dichloropropane, and chlorobenzene; sulfoxides such as dimethyl sulfoxide; and pyrrolidones such a N-methyl-2-pyrrolidone and N-octyl-2-pyrrolidone.

Examples of coating methods used to form hard coat layer 4 are ink-jet method, spin-coating method, dip coating method, roll coating method, slit coater method, and transfer method.

Heating of the hard coat layer-forming material is desirably carried out by heating it to a first heating temperature, and then heating it to a second heating temperature.

The first heating temperature is desirably set to about 90 to 110°C, preferably 100 ± 5°C.

The period of heating at the first heating temperature is set to about 1 to 10 minutes, preferably about 5 to 10 minutes.

The second heating temperature is desirably set to about 110 to 130°C, preferably to about 100 ± 5°C.

The period of heating at the second heating temperature is set to about 1 to 2 hours, preferably to 100 ± 0.2 hours.

The atmosphere during heating is not specifically limited. However, it can be an oxygen-containing atmosphere or an atmosphere of an inert gas such as nitrogen.

Heating under the conditions set forth above allows hydrolysis · polycondensation reaction to advance more suitably, making it possible to form a hard coat layer 4 of good film strength.

Eyeglass lens 1 is manufactured as set forth above.

### <Second implementation mode>

A second implementation mode in which the optical member of the present invention is applied to an eyeglass lens will be described next.

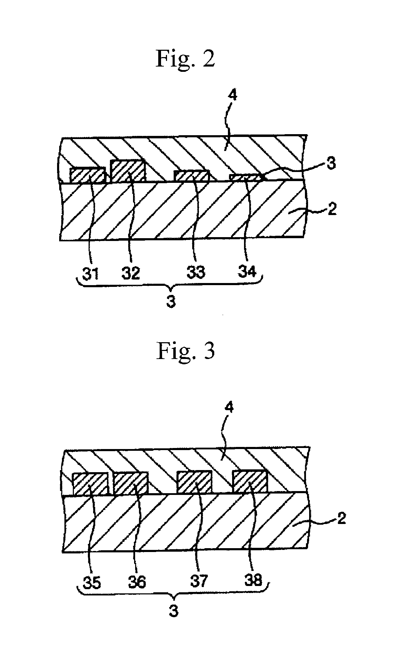

Fig. 2 is a partial sectional view of the second implementation mode, in which the optical member of the present invention is applied to an eyeglass lens.

A description focusing on the ways in which eyeglass lens 1 of the second implementation mode differs from eyeglass lens 1 of the first implementation mode will be given below, and the description of items that are identical will be omitted.

The eyeglass lens 1 shown in Fig. 2 is identical to the eyeglass lens 1 shown in Fig. 1 with the exception that the configuration of patterning layer 3 differs.

That is, in eyeglass lens 1 of the second implementation mode, patterning layer 3, in a planar view, comprises a first layer 31 formed in a first region, a second layer 32 formed in a second region, a third layer 33 formed in a third region, and a fourth region 34 formed in a fourth region. As shown in Fig. 2, first to fourth layers 31 to 34 mutually differ in thickness.

In this manner, even in the case where individual layers 31 to 34 formed in individual regions 1 to 4 differ in thickness, when eyeglass lens 1 is viewed obliquely, various layers 31 to 34 are visible. The colors of individual layers 31 to 34 when rendered visible can also be made different.

That is, the main color that becomes visible in patterning layer 3 when rendered visible can be made different for each of layers 31 to 34. This makes it possible to further enhance the design properties of eyeglass lens 1.

When the colors that are visible in each of the layers are made mutually different, the difference in thickness between the various layers is desirably set to 10 to 100 nm, preferably 20 to 70 nm. This causes different colors to reliably become visible in different layers.

In the eyeglass lens of such a second implementation mode, the same effect as in the first implementation mode can be achieved.

The dimensions of each component are the same as in eyeglass lens 1 of the first implementation mode.

In the present implementation mode, the case where hard coat layers 4 are present between each of individual layers 31 to 34 formed in individual regions 1 to 4 and they are independently (individually) formed has been given as an example. However, there is no limitation to such a case. It is possible for hard coat layers 4 not to be present between each of layers 31 to 34, and for individual layers 31 to 34 to be formed in mutual contact.

### <Third implementation mode>

A third implementation mode in which the optical member of the present invention is applied to an eyeglass lens will be described next.

Fig. 3 is a partial sectional view of a third implementation mode, in which the optical member of the present invention is applied to an eyeglass lens.

A description focusing on the ways in which eyeglass lens 1 of the third implementation mode differs from eyeglass lens 1 of the first implementation mode will be given below, and the description of items that are identical will be omitted.

The eyeglass lens 1 shown in Fig. 3 is identical to the eyeglass lens 1 shown in Fig. 1 with the exception that the configuration of patterning layer 3 differs.

That is, patterning layer 3 in the eyeglass lens of the third implementation mode, in a planar view, comprises a first layer 35 formed in a first region, a second layer 36 formed in a second region, a third layer 37 formed in a third region, and a fourth layer 38 formed in a fourth region. The refractive indexes of first to fourth layers 35 to 38 are mutually different.

In this manner, even in the case where the refractive indexes of individual layers 35 to 38 formed in individual regions 1 to 4 differ, when eyeglass lens 1 is viewed obliquely, each of layers 35 to 38 is visible. It is also possible for the colors of individual layers 35 to 38 when rendered visible to differ.

That is, the patterning layer 3 that becomes visible can also have more complex colors.

When the colors that are recognized in the individual layers are made mutually different, the difference in the refractive indexes (Ne) between the various layers is desirably set to 0.1 to 0.6, preferably 0.2 to 0.6. This makes it possible to more reliably impart different colors to the various layers.

In an eyeglass lens 1 such as that of the third implementation mode, the same effect can also be achieved as in the first implementation mode.

The dimensions of the various parts are identical to those in eyeglass lens 1 of the first implementation mode.

In the present implementation mode, the case where hard coat layer 4 is present between each of individual layers 35 to 38 formed in individual regions 1 to 4 and layers 35 to 38 are independently (individually) formed has been given as an example. However, there is no limitation to such a case. It is possible for hard coat layer 4 not to be present between each of layers 35 to 38, and for individual layers 35 to 38 to be formed in mutual contact.

### <Fourth implementation mode>

A fourth implementation mode in which the optical member of the present invention is applied to an eyeglass lens will be described next.

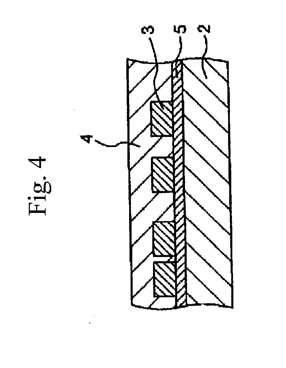

Fig. 4 is a partial sectional view of a fourth implementation mode, in which the optical member of the present invention is applied to an eyeglass lens.

A description focusing on the ways in which eyeglass lens 1 of the fourth implementation mode differs from eyeglass lens 1 of the first implementation mode will be given below, and the description of items that are identical will be omitted.

Eyeglass lens 1 of Fig. 4 is identical to eyeglass lens 1 of Fig. 1 with the exception that a colored layer 5 is present between lens substrate 2 and patterning layer 3.

That is, in eyeglass lens 1 of the fourth implementation mode, colored layer 5 is formed so as to cover lens substrate 2 in its entirety.

Colored layer 5 functions to lower the transmittance of light passing through eyeglass lens 1 and ensure tight adhesion between lens substrate 2 and patterning layer 3 or hard coat layer 4. It also functions to enhance the impact resistance of lens substrate 2. That is, colored layer 5 functions as a primer.

Examples of the material constituting colored layer 5 are resin materials such as acrylic resins, melamine resins, urethane resins, epoxy resins, polyvinyl acetal resins, amino resins, polyester resins, polyamide resins, vinyl alcohol resins, styrene resins, silicone resins, mixtures thereof, and copolymers thereof.

Colored layer 5 can contain metal oxides in addition to the resin material. The refractive index of colored layer 5 can thus be raised, and by setting the contents thereof and the like, a desired refractive index can be achieved in colored layer 5.

The metal oxides are not specifically limited. Examples are oxides of Si, Al, Sn, Sb, Ta, Ce, La, Fe, Zn, W, Zr, In, and Ti. One of these oxides, or a combination of two or more, can be employed. The metal oxides can be in the form of a sol comprised of microparticles thereof.

In colored layer 5, a layer comprised of constituent materials such as those set forth above is usually colored by dyeing with dyes.

Examples of dyes are Solvent Yellow 102, Solvent Yellow 104, Solvent Yellow 117, Solvent Yellow 157, Solvent Orange 68, Solvent Orange 72, Solvent Orange 79, Solvent Green 26, Solvent Violet 33, Solvent Violet 39, Solvent Brown 46, Solvent Black 36, Solvent Black 50, Solvent Blue 97, Solvent Blue 99, Solvent Red 160, Solvent Red 175, Solvent Red 180, Solvent Red 216, Disperse Yellow 54, Disperse Yellow 124, Disperse Yellow 128, Disperse Yellow 134, Disperse Yellow 140, Disperse Orange 5, Disperse Orange 37, Disperse Orange 93, Disperse Orange 103, Disperse Orange 112, Disperse Orange 134, Disperse Orange 370, Disperse Green 7, Disperse Violet 61, Disperse Violet 63, Disperse Brown 1, Disperse Brown 13, Disperse Blue 27, Disperse Blue 54, Disperse Blue 56, Disperse Blue 176, Disperse Blue 182, Disperse Blue 193, Disperse Red 146, Disperse Red 199, Disperse Red 202, Disperse Red 204, Disperse Red 207, and Disperse Red 291. These dyes can be employed singly or in combinations of two or more.

The dyeing method that is generally employed includes immersing the lens in a dye that has been dispersed in water (hot water) or dissolved in an organic solvent.

The refractive index of the colored layer 5 thus constituted is set to be nearly identical to the refractive index of hard coat layer 4. Thus, the generation of buffer fringes due to the difference in the refractive indexes of colored layer 5, lens substrate 2, and hard coat layer 4 can be prevented or inhibited. Accordingly, it is possible that patterning layer 3 does not become visible when eyeglass lens is viewed directly, but is reliably rendered visible when eyeglass 1 is viewed obliquely.

The average thickness of colored layer 5 is not specifically limited. It is desirably 500 to 2,000 nm, preferably 500 to 1,000 nm.

The same effect as in the first implementation mode can be achieved in the eyeglass lens 1 of the fourth implementation mode. Various design properties can be further imparted to eyeglass lens 1 by combining patterning layer 3 with the colors of colored layer 5.

The dimensions of the various components are identical to those of eyeglass lens 1 of the first implementation mode.

When the transmittance of light passing through eyeglass lens 1 is decreased in a sunglass lens as in the present implementation mode, those subjected to dyeing are not limited to colored layer 5. At least one from among lens substrate 2 and hard coat layer 4 can be dyed by the dyeing method set forth above.

Dyeing can be omitted from colored layer 5, which can then be used as an intermediate layer such as a primer layer.

The optical member is not limited to the eyeglass lenses that have been described in the various implementation modes. It can be applied to various lenses that pass light. For example, it can be applied to the lenses that are present in terminals and the like, such as the lenses of televisions, projectors, computer displays, portable telephones, and smart phones.

The optical member and method of manufacturing the optical member of the present invention have been described above. However, the present invention is not limited thereto.

For example, in the optical member of the present invention, each configuration can be substituted with any configuration capable of performing the same function, or any configuration can be added.

For example, in the present invention, it is possible for any two or more of the configurations described in the first to fourth implementation modes to be combined.

Further, the method of manufacturing an optical member of the present invention is not limited to the configurations of the implementation modes set forth above; the order of the steps can be changed. One or more steps for any purpose can be added and unneeded steps can be eliminated.

### EXAMPLES

### 1. Preparation of various layer-forming materials

### 1-1. Preparation of patterning layer-forming material

To a stainless steel vessel were charged 130 weight parts of water, 22 weight parts of ethylene glycol, and 10 weight parts of isopropanol. The mixture was thoroughly stirred and 14 weight parts of polyurethane resin (SF410, made by ) were admixed.

One weight part each of acetylene-based nonionic surfactants (Surfynol 104E and Surfynol 465, made by Air Products and Chemicals, Inc.) and 0.5 weight part of a polyether-modified siloxane surfactant (BYK-348, made by BYK Japan) were added. Stirring was continued for one hour, after which the mixture was filtered with a 2 µm filter to obtain a patterning layer-forming material.

### 1-2. Preparation of hard coat layer-forming material

To a stainless steel vessel were charged 1,300 weight parts of butyl cellosolve and 800 weight parts of γ-glycidoxypropyltrimethoxysilane. The mixture was stirred and mixed, after which 220 weight parts of 0.01 mol/liter of hydrochloric acid were added with stirring. Stirring was continued for a day and a night, yielding a silane hydrolysis product. To this silane hydrolysis product were admixed 7,000 weight parts of a compound microparticulate sol containing mainly titanium oxide, tin oxide, and silicon oxide (Optolake 1120Z 8RU-25·A17, methanol dispersion, total solid component 20 weight percent, made by Catalysts & Chemicals Ind. Co., Ltd.). Five hundred weight parts of an epoxy compound (EX-313, made by Nagase ChemteX Corporation), 30 weight parts of a surface smoothing agent in the form of a silicone surfactant (L-7001, made by Nippon Unicar Co., Ltd.), and 20 weight parts of a curing agent in the form of iron (III) acetylacetonate were added and the mixture was stirred for a day and a night. Subsequently, the mixture was filtered with a 3 µm filter to obtain a hard coat layer forming coating liquid.

### 2. Manufacturing of laminate (eyeglass lens)

### (Example)

[1] A lens substrate in the form of a plastic lens substrate for eyeglasses with a refractive index (Ne) of 1.67 (Seiko Super Sovereign (SSV), made by Seiko Epson Corporation) was first provided. It was irradiated for 30 seconds with a low-pressure mercury lamp (UV) to enhance wettability.
[2] Next, a cartridge was filled with ink in the form of the patterning layer-forming material prepared in 1-1 above. An ink-jet printer (MMP813H, made by Mastermind Corp.) was then used to feed the patterning layer-forming material onto the upper surface (curved convex surface) of the lens substrate to form a coating 0.8 µm in thickness patterned into the shape of the letters "PSO." This was dried for 1 hour at 80°C to form a patterning layer (thickness: 0.8 µm, refractive index (Ne): 1.50) patterned into the shape of the letters "PSO."
[3] Next, following immersion for 20 seconds in the hard coat layer-forming material adjusted as set forth in 1-2, the lens substrate was withdrawn at a rate of 30 cm/minute from the liquid and baked for 30 minutes at 80°C. The lens substrate was then heated for 2 hours in an oven set to 120°C, yielding the laminate (eyeglass lens) of Example including a lens substrate provided with a patterning layer on which was formed a hard coat layer (refractive index: 1.67).

### 3. Evaluation

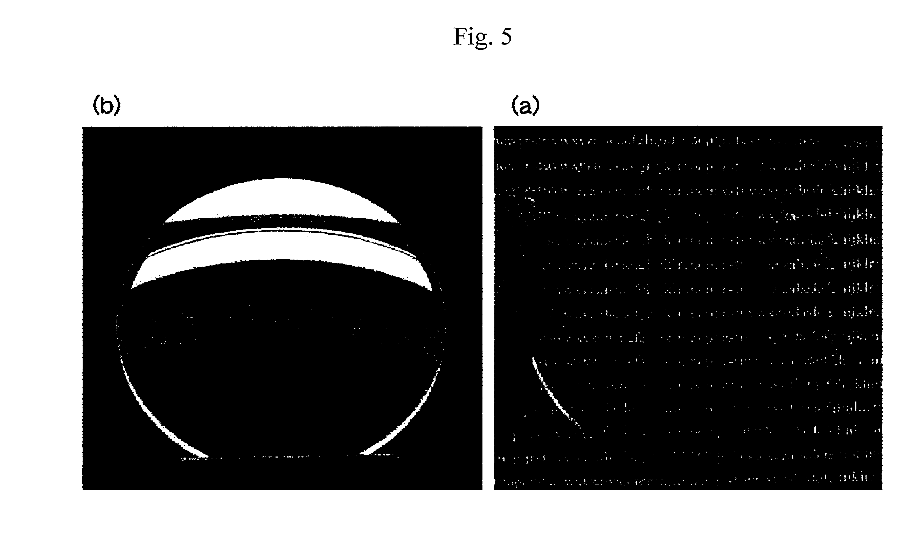

Fig. 5 shows a photograph of the eyeglass lens obtained in Example. (a) is a photograph taken of a direct view (shot in the direction of the optical axis) of the eyeglass lens of Example. (b) is a photograph taken of an oblique view (shot from a direction neither parallel or perpendicular to the direction of the optical axis) of the eyeglass lens of Example. As shown in Fig. 5(a), when the eyeglass lens of Example was viewed directly, the letters "PSO" that had been patterned by means of the patterning layer were not visible. Further, when viewed directly, the patterning layer did not impede the field of vision and it was possible to recognize letters through the lens.

By contrast, as shown in Fig. 5, when the eyeglass lens of Example was viewed obliquely, the letters "PSO" became visible.

### Explanation of symbols

1...Eyeglass lens 2...Lens substrate 3...Patterning layer 31...First layer 32...Second layer 33...Third layer 34...Forth layer 35...First layer 36...Second layer 37...Third layer 38...Forth layer 4...Hard coat layer 5...Colored layer.

## Claims

1. An optical member, **characterized by** comprising:
a lens substrate;
a patterning layer in which a prescribed shape has been patterned in a manner covering a portion of the lens substrate; and
a hard coat layer formed so as to cover the lens substrate and the patterning layer; and
in that a refractive index of the lens substrate is equal to a refractive index of the hard coat layer, and differs from a refractive index of the patterning layer by equal to or more than 0.02.

2. The optical member according to claim 1, wherein the patterning layer is invisible when directly viewing the optical member along an optical axis of the optical member, and visible when viewing the optical member obliquely relative to a direction of the optical axis.

3. The optical member according to claim 1 or 2, wherein the patterning layer has a diffuse transmittance of equal to or less than 1.0.

4. The optical member according to any of claims 1 to 3, wherein the patterning layer has a refractive index of equal to or more than 1.2 but equal to or less than 2.8.

5. The optical member according to any of claims 1 to 4, wherein the patterning layer comprises a first layer formed in a first region and a second layer formed in a second region, in a planar view as viewed along the optical axis of the optical member.

6. The optical member according to claim 5, wherein a thickness of the first layer differs from a thickness of the second layer.

7. The optical member according to claim 5 or 6, wherein a refractive index of the first layer differs from a refractive index of the second layer.

8. A method of manufacturing an optical member, **characterized by** comprising:
forming a patterning layer, covering a portion of a lens substrate and having a refractive index differing from the refractive index of the lens substrate by equal to or more than 0.02, in a prescribed shape; and
forming a hard coat layer with a refractive index that is equal to the refractive index of the lens substrate so as to cover the lens substrate and the patterning layer.
